**Europäisches Patentamt**

(19) **European Patent Office**

**Office européen des brevets**

(11) Numéro de publication: **0 005 722**
**B1**

(12) **FASCICULE DE BREVET EUROPEEN**

(45) Date de publication du fascicule du brevet:
14.03.84

(51) Int. Cl.³: **H 04 Q 3/54**, G 06 F 3/04

(21) Numéro de dépôt: **79101222.2**

(22) Date de dépôt: **23.04.79**

(54) **Système de sélection de circuit d'interface prioritaire.**

(30) Priorité: **07.06.78 FR 7817709**

(43) Date de publication de la demande:
**12.12.79 Bulletin 79/25**

(45) Mention de la délivrance du brevet:
**14.03.84 Bulletin 84/11**

(84) Etats contractants désignés:
**DE FR GB**

(56) Documents cités:
**US - A - 3 800 287**
**US - A - 3 863 225**

**"INSTITUTE OF ELECTRICAL AND ELECTRONICS ENGINEERS. PROCEEDINGS OF THE 1971 I.E.E.E. INTERNATIONAL COMPUTER SOCIETY CONFERENCE, September 22-24-1971 BOSTON. HARDWARE-SOFTWARE-FIRMWARETRADE-OFFS" NEW YORK (US) WARD: "A Scheme For Dynamic Priority Control in Demand Actuated Multiplexing", pages 51-52**

(73) Titulaire: **International Business Machines Corporation, Old Orchard Road, Armonk, N.Y. 10504 (US)**

(72) Inventeur: **Dalboussiere, Gérard, Résid. de l'Escours Villa 19 Chemin de l'Escours, F-06480 La Colle/Loup (FR)**
Inventeur: **Draper, Wilburn D., IBM Corporation Dept. A56/B162 P.O. Box 12195, Research Triangle Park, NC 27709 (US)**

(74) Mandataire: **Tubiana, Max, Compagnie IBM France Département de Propriété Industrielle, F-06610 La Gaude (FR)**

0 005 722

## Système de sélection de circuit d'interface prioritaire

### Domaine Technique

L'invention traite d'un système de sélection de circuit d'interface prioritaire. Elle est applicable notamment aux contrôleurs de communication. Elle se rapporte plus particulièrement à des moyens permettant de gérer les transferts de données au travers d'adaptateurs, en tenant compte de priorités.

Les contrôleurs de communications modernes sont des dispositifs destinés à être incorporés dans un système de télétraitement de données, de manière à y gérer non seulement les transmissions sur les diverses lignes qui y sont rattachées, mais en outre l'exécution de certaines fonctions de télétraitement. Dans de nombreuses installations, la commande principale du réseau de télétraitement est concentrée dans une ou plusieurs unité(s) centrale(s) (CPU) contenant un répertoire des règles de traitement des données provenant de ou se dirigeant vers les stations terminales du réseau de télétraitement. L'envoi et la réception des données au travers des lignes de transmission (lignes physiques ou faisceaux hertziens) sont gérés par des contrôleurs de communications placés sous la dépendance du ou des CPU. Mais outre l'exécution de commandes de transmission au sens strict du terme, le contrôleur est chargé d'exécuter des fonctions dudit répertoire, notamment des fonctions relevant directement des procédures standard de transmission. De ce fait, le CPU se trouve libéré des tâches correspondantes et peut se consacrer à l'exécution d'autres travaux.

Le contrôleur de communications est donc un ensemble intelligent relativement complexe. Cette intelligence est en majorité concentrée dans une ou plusieurs unités de commande centrales (CCU). Les CCU sont reliées, d'une part aux terminaux au travers d'adaptateurs dits de lignes, et d'autre part au(x) CPU au travers d'adaptateurs de canaux ainsi désignés en raison du fait qu'ils sont connectés aux canaux multiplex du (ou des) CPU. Lorsqu'un adaptateur veut effectuer un transfert, il fait une demande de service et attend la réponse du CCU.

### Etat de la technique

Toutes les tâches confiées aux adaptateurs n'ont pas la même urgence. Pour en tenir compte, on attribue à ces tâches, des niveaux de priorités. La gestion des adaptateurs est relativement simple lorsque chacun d'entre eux ne se voit confier que des tâches de même niveau de priorité. Il suffit alors de déterminer l'identité des adaptateurs demandeurs de service pour savoir par lequel il faut commencer.

Mais il n'est pas toujours possible de procéder ainsi car l'architecture du système de télétraitement exige souvent que des tâches de niveaux de priorités différents puissent être confiées à un même adaptateur. On peut alors répartir les adaptateurs par groupes, et adjoindre à chaque groupe un système d'auto-sélection. Avant de formuler une demande de service ou de répondre à un ordre de service provenant du CCU, les adaptateurs du même groupe se consultent mutuellement pour déterminer lequel d'entre eux doit réagir le premier. Un tel système a été décrit dans l'article de Phillip W. Ward publié dans la revue US-A Proceedings of the 1971 IEEE International Computer Society Conferences, septembre 22—24, 1971, sous le titre »A Scheme for Dynamic Priority Control in Demand Actuated Multiplexing«. Ward traite d'un système dans lequel les interfaces (ou adaptateur IOA) sont »chaînés« en série par une ligne. Ce chaînage serait destiné à permettre la sélection d'un seul interface dans le cas ou plusieurs demandes de service ont la même priorité. Le système de Ward comporte en outre un bus de priorités sur lequel se propagent des informations relatives aux priorités des demandes de services formulées auprès des interfaces. L'ensemble des opérations de sélection passe cependant par une unité spéciale (PCS). Cette unité PCS reçoit des signaux de demandes de services de tous les interfaces à travers un bus OU, CBUSS, ainsi que la sortie de la ligne de chaînage des interfaces. C'est le PCS qui engendre et transmet un signal d'interruption de l'unité centrale à la fin d'un cycle PCS. Quant au cycle PCS, il est démarré par un signal sur le bus CBUSS. Le PCS gère alors les opérations de comparaison des priorités des services demandés par le IOA bit à bit. Ainsi, les IOA les moins prioritaires se retirent un à un pour se mettre en position attente (IOAWAIT). A la fin de ces opérations, seuls les IOA ayant la même plus grande priorité (la plus significative) restent en lice. Un signal de demande d'interruption est alors transmis par le PCS et le système reste figé jusqu'à ce que l'unité centrale soit prête à servir un interface. Au moment choisi par l'unité centrale, c'est l'interface le plus proche, qui est servi. Un tel système présente quelques inconvénients. Notamment, il utilise un dispositif spécial (PCS) de gestion des demandes de service avec tout ce que cela implique comme circuits logiques et câblage entre ledit dispositif PCS et les interfaces IOAs. En outre, et ceci est extrêmement important, il ne permet pas une mise à jour de la sélection entre l'instant où la demande d'interruption est transmise au CCU et l'instant où celui-ci est prêt à y répondre.

D'autres systèmes tels que celui décrit dans le brevet US-A-3 800 287 répartissent les adaptateurs en fonction de priorités fixes ce qui facilite la sélection mais pose des contraintes évidentes.

2

# 0 005 722

## Résumé de l'invention

Un objet de la présente invention est donc de fournir des moyens permettant de gérer les demandes de service de dispositifs d'interface rattachés à une unité centrale en respectant les priorités de ces demandes, et ce, en perdant le moins de temps possible.

Bien que l'invention s'applique à tout ensemble de dispositifs ou circuits d'interface entre des organes demandeurs de services de priorités différentes et une unité centrale, on traitera essentiellement des demandes de service émanant d'adaptateurs rattachés à un contrôleur de communication.

Un autre objet de la présente invention est donc de fournir des moyens permettant de sélectionner, au sein d'un groupe d'adaptateurs rattachés à un même contrôleur de communications celui qui doit être servi le premier, et ce, avec un minimum de retard.

Plus précisément la présente invention comporte un dispositif de présélection asynchrone opérant indépendamment de la disponibilité de l'unité centrale pour satisfaire aux demandes de service et permettant de tenir à jour l'opération de présélection et de préparer et simplifier, au maximum, la sélection proprement dite.

L'invention telle qu'elle est caractérisée dans les revendications à précidément pour objet un système de sélection d'interface à desservir à travers un bus (CCU BUS) par une unité centrale sur une base d'interruption prioritaire du genre comportant une ligne de sélection (SER SELECT) traversant en série d'aval en amont les interfaces à desservir, un bus de priorités (PR BUS) sur lequel les priorités de toutes les demandes de service en cours sont signalées par les interfaces, et, au sein de chaque interface, des moyens d'enregistrement ($PR_i$) de la priorité de la demande de service formulée par ledit interface, et des moyens de comparaison ($COMP_i$) pour comparer la priorité de la demande de l'interface considéré à l'ensemble des priorités apparaissant sur le bus de priorités, ledit système comportant des moyens de présélection asynchrone caractérisés en ce qu'ils comportent dans chaque interface:

> des moyens de commandes de présélection asynchrones (TD, $AP_i$) connectés auxdits moyens d'enregistrement ($PR_i$) et auxdits moyens de comparaison ($COMP_i$) et chargés de mettre à jour la priorité de la demande de service de l'interface considéré, de manière asynchrone par rapport à l'opération d'interruption de l'unité centrale;
>
> des moyens au sein desdits moyens de comparaison reliés auxdits moyens de commandes de présélection pour fournir une information logique $COMP_i = 1$ lorsque la priorité de la demande d'un interface est égale à la priorité la plus élevée apparaissant sur le bus de priorités;
>
> une bascule de sélection ($S_i$) reliée au CCU BUS;
>
> des moyens logiques ($REC_i^2$, $O_i$, $DR_i^3$) montés en série sur la ligne SER SELECT et commandant le niveau logique $SS_i$ en sortie de la ligne SER SELECT de l'interface considéré, en fonction du niveau logique ($SS_{i-1}$) sur la même ligne à l'entrée du même interface et du niveau logique indiqué par le comparateur $COMP_i$, de manière telle que:

$$SS_i = SS_{i-1} + COMP_i$$

> où le signe + indique un OU logique;
>
> des moyens pour enclencher la bascule $S_i$ lorsque $COMP_i = 1$ et $SS_{i-1} = 0$;
>
> ce que faisant, l'opération de sélection d'interface proprement dite se ramène à la simple détection par l'unité centrale, de l'interface dont la bascule $S_i$ est au niveau logique 1.

## Brève description des figures

La figure 1 est une architecture de système de télétraitement comportant un contrôleur de communications.

La figure 2 est la représentation schématique des éléments de l'invention.

La figure 3 représente un mode de réalisation des circuits d'un des dispositifs d'interface de l'invention.

La figure 4 représente un mode de réalisation du circuit de comparaison de la figure 3.

La figure 5 est un diagramme des temps de déroulement des opérations de sélection selon l'invention.

## Description d'un mode de réalisation de l'invention

Avant de décrire les circuits permettant de réaliser la sélection conformément à l'invention, on va décrire à titre d'exemple, un environnement dans lequel elle peut être utilisée.

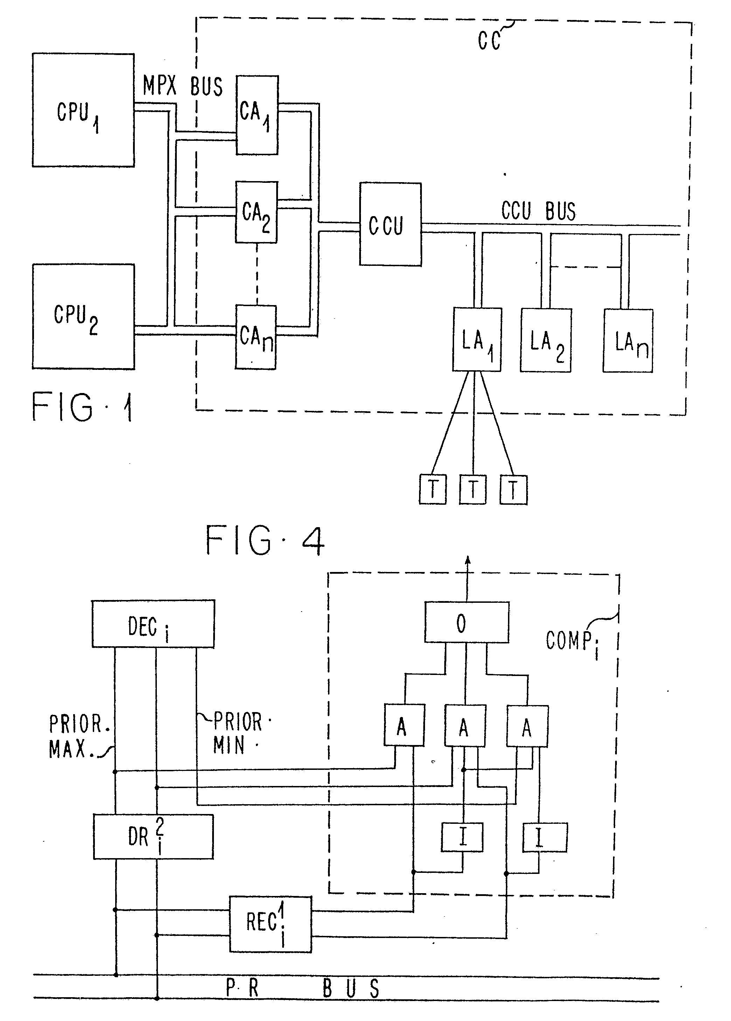

La figure 1 montre de façon très schématique l'architecture d'un Contrôleur de Communications (CC) situé dans un réseau de télétraitement. L'élément intelligent de CC, à savoir son Unité Centrale de Commande (CCU) gère les données transitant entre des terminaux T et des Unités Centrales de Traitement $CPU_1$ et $CPU_2$. Tout en effectuant sa tâche, le CCU applique des procédures et protocoles de transmis-

3

sions préalablement définis. Il est relié à des canaux multiplex (MPX BUS) des calculateurs $CPU_1$ et $CPU_2$ au travers d'adaptateurs de canaux $CA_1$, $CA_2$, . . ., $CA_n$. Il est aussi relié à des terminaux T au travers d'adaptateurs de lignes $LA_1$, $LA_2$, . . ., $LA_n$, connectés à un bus dit CCU BUS. Ces adaptateurs sont répartis par groupes, ici au nombre de deux, l'un contenant les CA l'autre les LA. Les adaptateurs d'un même groupe doivent pouvoir travailler apparemment concurremment. Or chacun d'eux est relié à des dispositifs à desservir, ce qui implique qu'un certain nombre de tâches de priorités différentes sont confiées à chaque adaptateur. Tout adaptateur désirant communiquer avec le CCU forme une demande de service. Mais le CCU ne peut satisfaire ces demandes à tout moment. Lorsqu'il est disposé à le faire, il en avise les adaptateurs en initiant une commande dite d'Entrée. L'ensemble des adaptateurs d'un même groupe doit alors réagir de manière à respecter les règles de priorité.

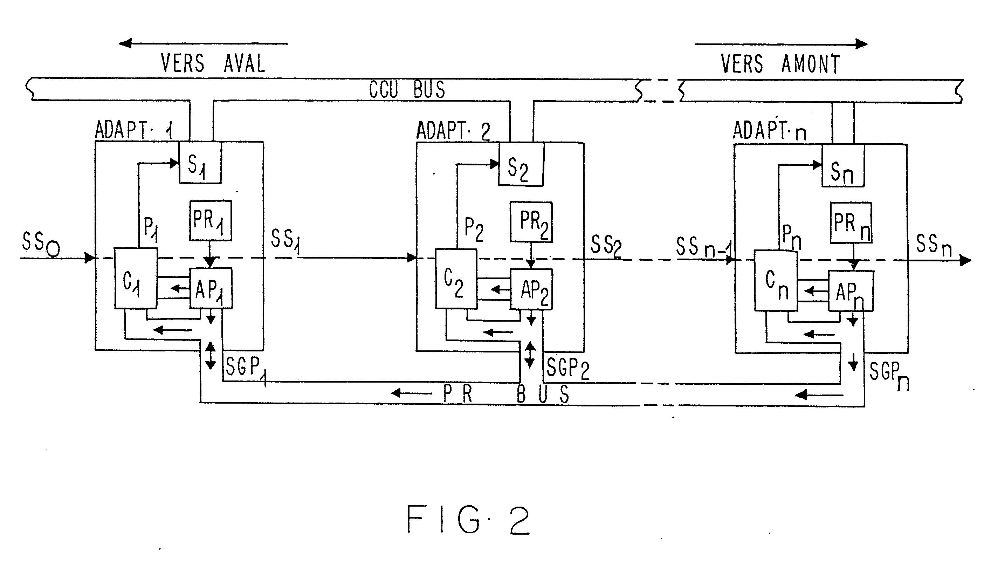

La figure 2 décrit schématiquement le principe de fonctionnement de l'invention. Les adaptateurs désignés par ADAPT.1 à ADAPT.n sont connectés au CCU BUS à travers une bascule de sélection $S_1$, $S_2$, . . ., ou $S_n$. Lorsqu'on parlera d'un adaptateur quelconque de la série, on le désignera par ADAPT.i et on ajoutera aux références de ses éléments correspondants le suffixe i. Chaque adaptateur comporte en outre essentiellement un registre de demande de priorité $PR_1$, $PR_2$, . . ., ou $PR_n$, un registre d'adaptation de priorité $AP_1$, $AP_2$, . . ., ou $AP_n$ et un dispositif de comparaison $C_1$, $C_2$, . . ., ou $C_n$. Les adaptateurs sont reliés entre eux par un bus de priorités désigné par PR BUS et par un ensemble de lignes de sélection en série SER SELECT SS. Le bus de priorités comporte une ligne par niveau de priorité à l'exclusion de la priorité la plus basse à desservir par le groupe d'adaptateurs considéré. Lorsqu'aucune des lignes de PR BUS n'est active, on en déduit que la priorité de la (ou des) demande(s) de service (SERV RQ) formulée(s) est au niveau le plus bas. Le PR BUS peut être bi ou uni-directionnel, mais la prise qui rattache chaque adaptateur au PR BUS est bi-directionnelle. Ce bus présente à chaque adaptateur une expression de la fonction logique OU des priorités des demandes de service des adaptateurs situés en amont de celui considéré.

En cours de fonctionnement si l'on considère le $i^{ème}$ adaptateur $ADAPT_i$, le contenu de $PR_i$ est fréquemment mis à jour pour refléter le niveau de priorité le plus élevé parmi ceux des demandes de service en attente dans l'adaptateur correspondant. Ce contenu peut être modifié à plusieurs reprises entre deux instants de sélection consécutifs. Il est transféré dans un registre $AP_i$ sous la commande d'un signal de transfert TD qui doit garantir la non modification du contenu de $AP_i$ durant l'opération de sélection de l'adaptateur par le CCU. Une fonction logique OU est exécutée entre $AP_i$ (entendre par là son contenu) et le contenu du PR BUS vu par l'adaptateur, de manière à engendrer une fonction logique dite de priorité de groupe série ($SGP_i$). Dans le cas où le bus de priorité est unidirectionnel, l'information $SGP_i$ est perçue par tous les adaptateurs du groupe situés en aval de l'adaptateur considéré. Donc $SGP_i = AP_i + SGP_{i+1}$. $AP_i$ est ensuite comparé en $C_i$, à $SGP_i$ pour déterminer si l'adaptateur correspondant doit être candidat à la pré-sélection.

Tel est le cas lorsque $AP_i = SGP_i$ ou, en d'autres termes, lorsque la priorité de la demande traduite par le contenu de $AP_i$ est égale à la priorité la plus élevée manifestée par le contenu de $SGP_i$. Si l'on désigne par $SS_{sortie}$ et $SS_{entrée}$ les niveaux logiques de SER SELECT, respectivement à la sortie et à l'entrée d'un adaptateur, on aura $SS_{i\,sortie} = 1$ si $SS_{i\,entrée} = 1$ ou si $AP_i = SGP_i$ pour ledit adaptateur.

L'état des niveaux logiques de SER SELECT peut changer de manière asynchrone. Il n'est pris en considération que lorsque les conditions entraînant le transfert de $PR_i$ dans $AP_i$ disparaissent et que les états des $SGP_i$ se stabilisent. A ce moment là, le mécanisme de présélection se fige et les signaux $SS_i$ sont fixés. La présélection d'un adaptateur n'exige alors plus que la réalisation d'une fonction logique simple: l'adaptateur choisi est celui pour lequel l'exécution de la fonction logique ET entre $SS_{i\,sortie}$ et l'inverse de $SS_i$ entrée fournit un niveau logique 1. Cette condition ne sera vérifiée que pour un et un seul adaptateur d'un même groupe.

L'opération de sélection proprement dite est alors réduite à sa plus simple expression. Lorsque l'unité de commande CCU envoie sur le CCU BUS un ordre de sélection (ORD SEL), seul l'adaptateur désigné par la présélection ($P_i = 1$) répond à cet ordre, fournit son identité au CCU, et enclenche sa bascule $S_i$ au niveau logique un. Les autres adaptateurs restaurent leurs bascules en les mettant au niveau logique zéro.

En dehors des cas où les adaptateurs désignent celui d'entre eux qui doit être servi en premier, il existe des situations où ce libre choix n'est pas laissé aux adaptateurs. Il en est ainsi, notamment lorsque la sélection est programmée (SEL PROG). Le CCU fournit alors l'adresse de l'adaptateur à connecter au CCU BUS sous forme de données de sélection (D SEL) précédée d'un signal caractérisant une sélection programmée. Tous les adaptateurs reconnaissent ce signal et décodent la donnée de sélection qui suit. L'adaptateur qui se reconnaît, car D.SEL est identique à sa propre donnée d'identification IDENT., enclenche sa bascule S, les autres restaurent la leur.

Une fois la sélection réalisée, qu'elle ait été programmée ou qu'elle résulte du processus de pré-sélection, toutes les données d'entrée/sortie adressées au groupe d'adaptateurs ne sont prises en compte que par l'adaptateur dont la bascule de sélection S est enclenchée.

Le fonctionnement des dispositifs de sélection obéit donc aux relations logiques suivantes (où les ET et OU logiques sont respectivement représentés par un point et un +).

(1)  S  Bascule de Sélection:

$$S_{enclenché} = (ORD.\ SEL) \cdot P + [SEL\ PROG.\ (DSEL = IDENT)]$$

$$S_{restauré} = (ORD.\ SEL) \cdot \overline{P} + [SEL\ PROG.\ (DSEL \neq IDENT)]$$

(2)  P  Condition de Présélection:

$$P_i = (SERV\ RQ) \cdot SS_i \cdot \overline{SS_{i-1}}$$

(3)  PR  Demande de priorité (Registre)

Mis à jour de manière asynchrone selon des besoins.

(4)  AP  Adaptateur de priorité (Registre)

$$AP_i = PR_i \cdot TD$$

(5)  SGP  Priorité de Groupe Série:

$$SGP_1 = AP_1 + AP_2 + \ldots + AP_i + \ldots + AP_n$$

$$SGP_2 = \qquad AP_2 + \ldots + AP_i + \ldots + AP_n$$

$$\vdots$$

$$SGP_i = \qquad\qquad AP_i + \ldots + AP_n = \sum_{j=i}^{n} AP_j$$

$$\vdots$$

$$SGP_n = \qquad\qquad\qquad AP_n$$

(6)  SS  Sélection Série:

$$SS_i = SS_{i-1} + [SERV\ RQ.\ (AP_i = SGP_i)]$$

$$SS_0 = 0$$

Etant entendu que l'expression $AP_i = SGP_i$ signifie que le niveau de priorité identifié par $AP_i$ est égal au niveau de priorité le plus élevé contenu dans $SGP_i$ donc concernant les adaptateurs de rang i à n (soit adaptateurs en amont de i plus adaptateur de rang i).

Les conditions de pré-sélection d'un adaptateur de rang i peuvent donc être résumées comme suit:

$$SS_i = SS_{i-1} + (AP_i = SGP_i)$$

$$P_i = SS_i \cdot \overline{SS_{i-1}} = [SS_{i-1} + (AP_i = SGP_i)] \cdot \overline{SS_{i-1}} = \overline{SS_{i-1}} \cdot (AP_i = SGP_i).$$

On voit ainsi que le système prévu permet d'éliminer tout conflit entre adaptateurs. En effet, dès que l'adaptateur le plus en aval parmi ceux en conflit a été choisi, les autres reçoivent un niveau logique 1 sur leur entrée SER SELECT et leur condition de pré-sélection P est automatiquement mise à zéro.

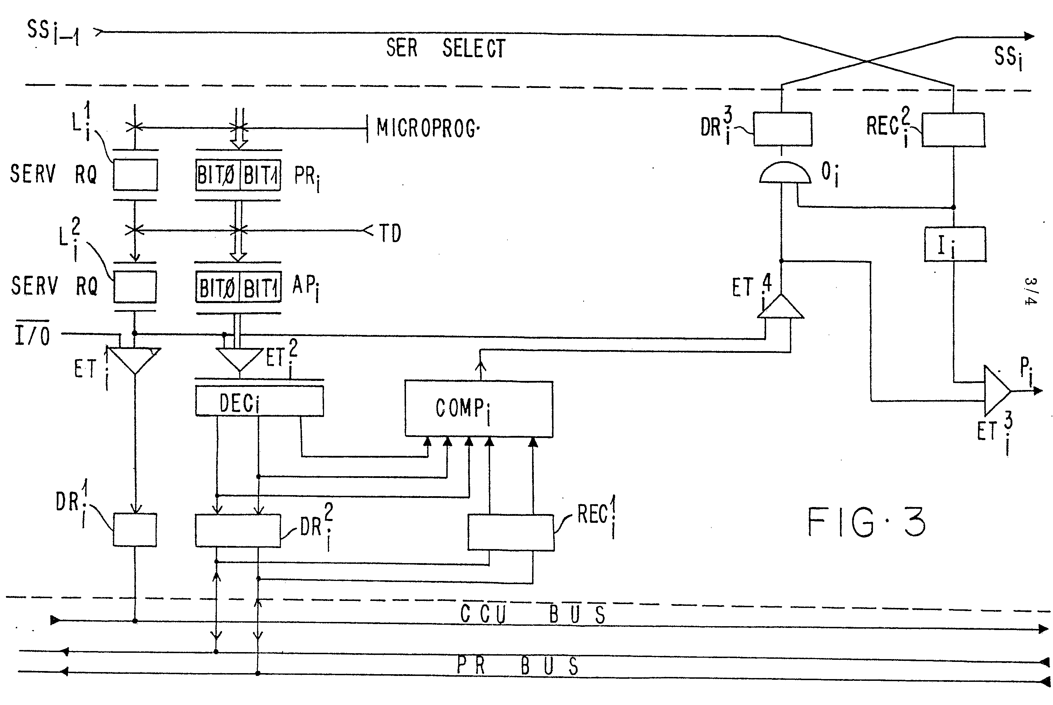

On a représenté sur la figure 3 un mode de réalisation du dispositif de pré-sélection appartenant au $i^{ème}$ adaptateur d'un groupe. Un dispositif, non représenté sur la figure, détermine le niveau de priorité le plus élevé parmi ceux des demandes formulées par les organes desservis par cet adaptateur. Ce niveau est enregistré par $PR_i$. Ayant ici fixé à trois le nombre total de niveaux de priorité du système, les registres de type PR et AP ont deux positions de bits. Le chargement de $PR_i$ est réalisé en même temps que l'enclenchement d'une bascule $L_i^1$, de manière asynchrone par rapport au CCU, et notamment sur

5

commande d'un microprogramme (non représenté) régissant par ailleurs le fonctionnement de l'adaptateur. La bascule $L_i^1$ traduit simplement la présence d'une demande de service SERV RQ. A l'apparition de TD = 1, le contenu de $L_i^1$ est transféré dans une bascule $L_i^2$ dite de demande de service d'adaptateur, tandis que le contenu de $PR_i$ est transféré en $AP_i$. On notera que, dans le mode de réalisation de l'invention choisi à titre d'exemple, on a profité de l'existence d'un signal appartenant à la procédure classique d'échanges sur le CCU BUS entre CCU et LA pour faire jouer à ce signal le rôle de TD. Dans ce cas TD est donc fourni par le CCU ce qui permet d'économiser une horloge, et de simplifier les opérations destinées à garantir la non modification du contenu de $AP_i$ durant l'opération de sélection proprement dite. Lorsque le niveau logique d'une ligne dite de commande d'entrée/sortie du CCU BUS passe au niveau logique zéro ($\overline{I/O} = 1$), la demande de service de l'adaptateur est formulée au CCU, par ouverture de la porte $ET_i^1$. Le niveau de tension nécessaire à l'attaque du CCU BUS est fourni par un circuit $DR_i^1$. La demande de service de l'adaptateur ($L_i^2 = 1$) commande aussi l'ouverture d'une porte $ET_i^2$ transmettant le contenu de $AP_i$ à un circuit de décodage désigné par $DEC_i$. La sortie de $DEC_i$ comporte trois fils, un par niveau de priorité possible. Ces fils, à l'exclusion de celui assigné à la priorité la plus basse, sont connectés au PR BUS à travers un circuit d'attaque $DR_i^2$. Une fonction logique OU est réalisée, à la sortie de $DR_i^2$, entre le contenu du PR BUS au niveau du $i^{ème}$ adaptateur et la sortie de $DR_i^2$. Un circuit récepteur $REC_i^1$ remet en forme l'information résultant de ladite fonction OU. La sortie de $REC_i^1$ est soumise en $COMP_i$ à une comparaison logique avec l'information issue de $DEC_i$. La sortie de $COMP_i$ est portée au niveau logique 1 lorsque la sortie de $DEC_i$ traduit une demande de service interne à l'adaptateur $\underline{i}$, de niveau de priorité égal à la priorité la plus élevée manifestée à la sortie de $REC_i^1$. En d'autres termes, $COMP_i = 1$ lorsque $AP_i = SGP_i$.

Un récepteur $REC_i^2$ remet en forme l'information logique $SS_{i-1}$ (autrement dit $SS_i$ entrée pour l'adaptateur considéré) provenant de la ligne de sélection série SER SELECT. L'inverseur $I_i$ en déduit $\overline{SS_{i-1}}$ qui est transmis à l'une des entrées d'une porte $ET_i^3$ à deux entrées. La seconde entrée de cette porte reçoit la sortie de $COMP_i$ à travers une porte $ET_i^4$ ouverte sur commande de la sortie de $L_i^2$. La sortie de $ET_i^3$ fournit donc l'information logique $P_i$. Un circuit $O_i$ réalise une fonction logique OU sur les sorties des $REC_i^2$ et $ET_i^4$. La sortie de $O_i$, remise en forme par un circuit $DR_i^3$ fournit l'information $SS_i$ (autrement dit $SS_{sortie}$ pour l'adaptateur considéré) à la ligne SER SELECT. Cette information est transmise en amont, donc à l'adaptateur de rang (i + 1).

Compte tenu du fait que $SS_0 = 0$ et que $P_i$ ne peut être porté à 1 que si $SS_{i-1} = 0$, le conflit pouvant résulter de demandes de service formulées par des adaptateurs différents d'un même groupe, est automatiquement résolu. Le service est accordé à l'adaptateur le plus en aval parmi ceux en conflit.

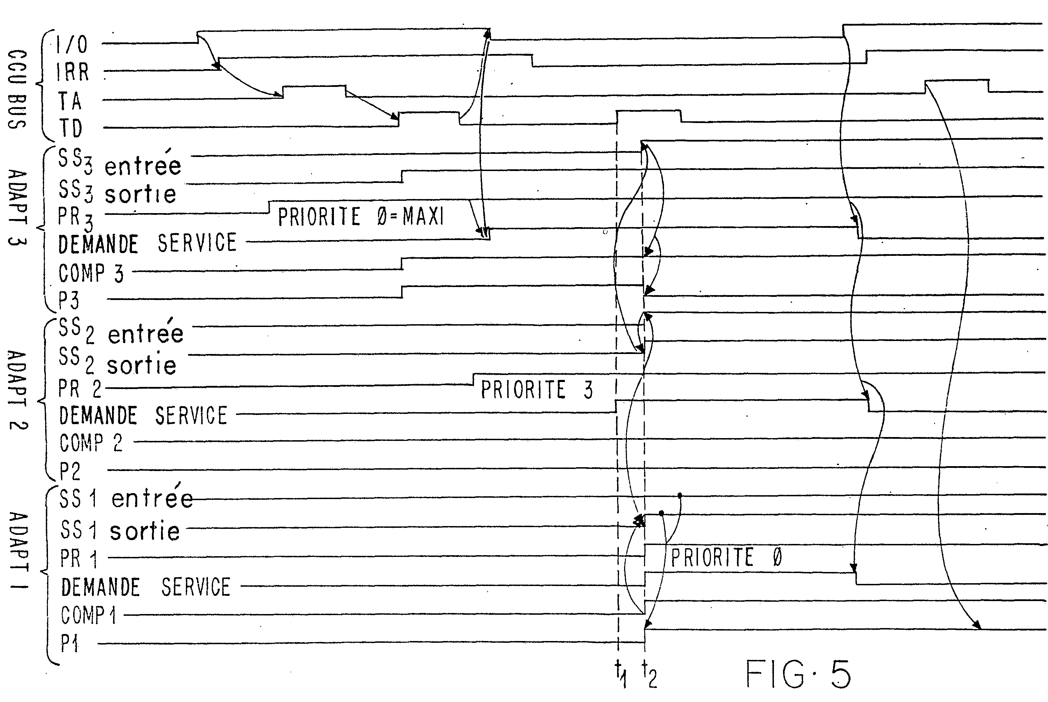

La figure 4 montre à titre d'exemple un circuit logique réalisant la fonction $COMP_i$. Ce circuit comporte deux inverseurs (I), trois circuits ET désignés par A et un circuit OU désigné par O. Les fils assignés aux priorités de niveau maximum et minimum ont été désignés par Prior.Max. et Prior.Min., respectivement.

Le diagramme des temps de la figure 5 permet de mieux comprendre le déroulement des opérations conduisant à la sélection d'un adaptateur.

Les quatre premières lignes du diagramme concernent le CCU BUS. Elles traduisent plus exactement les états logiques de quatre lignes de commande appartenant à ce bus.

La première ligne est désignée par I/O. Son état logique est commandé par le programme. Lorsque le CCU est disponible pour des opérations dites d'entrée/sortie, la ligne I/O est portée au niveau logique 1. Comme on l'a vu plus haut, les demandes de service d'un adaptateur ne peuvent être formulées au CCU que lorsque I/O = 0.

Immédiatement après que I/O soit passé à 1 le programme porte une ligne IRR à 1. Les adaptateurs retirent alors du CCU BUS toute demande de service.

Le niveau d'une troisième ligne TA, passe à 1 et le CCU place sur une partie du CCU BUS destinée aux données, un mot qui est reconnu par les adaptateurs comme un ordre de SECECTION. correspondant à ce que l'on a désigné plus haut par ORD.SEL.

La quatrième ligne indique les variations du signal TD.

Les lignes suivantes du diagramme concernent un groupe contenant trois adaptateurs. Elles servent à illustrer par des exemples, le processus de fonctionnement de l'invention en fonction du temps.

On a tout d'abord supposé que seul l'adaptateur 3 demandait le service et, au niveau de priorité $\emptyset$ donc le plus élevé. PR 3 affiche une demande de service interne à ce niveau de priorité. Lorsque TD passe au niveau logique 1, le contenu de $PR_3$ passe dans $AP_3$. Comme $AP_3 = SGP_3$, la sortie de $COM_P$ 3 passe à 1. En outre $\overline{SS_2} = 1$, d'où P 3 = 1. Aussitôt que $\overline{I/O} = 1$, l'adaptateur 3 formule sa demande de service au CCU en portant à 1 le niveau logique d'une ligne du CCU BUS réservée à cet usage. Mais avant que TA ne passe à 1 autorisant la sélection de l'adaptateur 3, d'autres demandes de service apparaissent et la mise à jour de la situation évolue grâce au mécanisme de pré-sélection. En effet, tout d'abord les organes desservis par l'adaptateur 2 formulent des demandes de service, dont le niveau de priorité le plus élevé est 3 (niveau le plus bas possible dans l'échelle des priorités du groupe d'adaptateurs). Dès que TD passe à 1 à l'instant $t_1$, PR 2 est transmis dans $AP_2$. Le cycle de pré-sélection recommence. Aucune demande n'étant encore formulée par ADAPT. 1, le niveau logique de SER SELECT à la sortie de cet adaptateur et à l'intrée de ADAPT. 2 est à zéro. Mais la ligne traduisant une demande de service de ADAPT. 2 passe au niveau logique 1. La demande formulée par ADAPT. 2 étant de niveau de priorité inférieur à celui de la demande de ADAPT. 3, $AP_2 < SGP_2$, les sorties de $COMP_2$ et $P_2$ restent au niveau logique zéro. La sortie SER SELECT de ADAPT 2 reste elle aussi à zéro. Par conséquent, pour ADAPT. 3 rien ne change et ce, jusqu'a l'instant $t_2$ où apparaît une demande de service en ADAPT. 1. Cette demande est au niveau de priorité le plus élevé (référence zéro). Il y aurait donc, en principe conflit, entre deux candidats à la pré-sélection à savoir ADAPT. 1 et ADAPT. 3. Comme TD est encore au niveau logique 1, à l'instant $t_2$, le contenu de $PR_1$ passe en $AP_1$. A ce moment $AP_1 = SGP_1$, la sortie de $COMP_1 = 1$. Il en résulte que le niveau logique de SER SELECT à la sortie de ADAPT. 1 passe à 1 et $P_1 = 1$.

Mais compte tenu de l'équation logique selon laquelle

$$SS_i = SS_{i-1} + [. \ldots .],$$

dès que le niveau logique passe à 1 en l'un des points quelconque de la ligne SER SELECT, ce niveau se propage en amont de la ligne à l'entrée et à la sortie de tous les adaptateurs. C'est ce que montre le diagramme.

De même, comme $P_i = SS_i \cdot \overline{SS_{i-1}}$, la propagation de la valeur logique 1 sur la ligne SER SELECT, ramène les sorties P située en amont de ADAPT. 1, au niveau logique zéro. D'où $P_2 = P_3 = 0$. Le fait que $P_3$ soit forcé au niveau logique zéro, résout le conflit de priorités entret les adaptateurs 1 et 3. Seul $P_1 = 1$. Donc aussi seule la bascule $S1 = 1$.

Lorsque le niveau logique I/O = 1, les niveaux logiques des lignes de demandes de service du CCU BUS passent à zéro.

Enfin, lorsque TA = 1 et que ORD.SEL apparaît sur le bus de données, une sélection proprement dite est ordonnée par le CCU. Le cycle de sélection est réduit à sa plus simple expression, un test des bascules S.

Dans l'exemple considéré, seul $S_1 = 1$, il y a donc sélection des ADAPT. 1.

**Revendications**

1. Système de sélection d'interface à desservir à travers un bus (CCU BUS) par une unité centrale sur une base d'interruption prioritaire du genre comportant une ligne de sélection (SER SELECT) traversant en série d'aval en amont les interfaces à desservir, un bus de priorités (PR BUS) sur lequel les priorités de toutes les demandes de service en cours sont signalées par les interfaces, et, au sein de chaque interface, des moyens d'enregistrement ($PR_i$) de la priorité de la demande de service formulée par ledit interface, et des moyens de comparaison ($COMP_i$) pour comparer la priorité de la demande de l'interface considéré à l'ensemble des priorités apparaissant sur le bus de priorités, ledit système comportant des moyens de présélection asynchrone caractérisés en ce qu'ils comportent dans chaque interface:

des moyens de commandes de présélection asynchrones (TD, $AP_i$) connectés auxdits moyens d'enregistrement ($PR_i$) et auxdits moyens de comparaison ($COMP_i$) et chargés de mettre à jour la priorité de la demande de service de l'interface considéré, de manière asynchrone par rapport à l'opération d'interruption de l'unité centrale;
des moyens au sein desdits moyens de comparaison reliés auxdits moyens de commandes de présélection pour fournir une information logique $COMP_i = 1$ lorsque la priorité de la demande d'un interface est égale à la priorité la plus élevée apparaissant sur le bus de priorités;
une bascule de sélection ($S_i$) reliée au CCU BUS;
des moyens logiques ($REC_i^2$, $O_i$, $DR_i^3$) montés en série sur la ligne SER SELECT et commandant le niveau logique $SS_i$ en sortie de la ligne SER SELECT de l'interface considéré, en fonction du niveau logique ($SS_{i-1}$) sur la même ligne à l'entrée du même interface et du niveau logique indiqué par le comparateur $COMP_i$, de manière telle que:

$$SS_i = SS_{i-1} + COMP_i$$

où le signe + indique un OU logique;
des moyens pour enclencher la bascule $S_i$ lorsque $COMP_i = 1$ et $SS_{i-1} = 0$;
ce que faisant, l'opération de sélection d'interface proprement dite se ramène à la simple détection par l'unité centrale, de l'interface dont la bascule $S_i$ est au niveau logique 1.

2. Système de sélection selon la revendication 1 caractérisé en ce que ladite mise à jour de la priorité de la demande de service de chaque interface est effectuée sous le contrôle d'une information logique (TD) fournie cycliquement par l'unité centrale sans interférence avec une commande d'interruption pour sélection d'interface.

**0 005 722**

## Patentansprüche

1. Auswahlsystem für Schnittstellen, die über eine Busleitung (CCU BUS) von einer Zentraleinheit (CPU) auf dem Prinzip der Vorrangunterbrechung ausgesteuert sind, das aufweist: eine Auswahlleitung (SER SELECT), die die Schnittstellen hintereinander von niedrig nach hoch durchläuft, eine Vorrangbusleitung (PR BUS), auf der die Vorranganfragen für die anstehenden Bedienungsanforderungen von den Schnittstellen signalisiert sind, innerhalb jeder Schnittstelle vorgesehene Mittel ($PR_i$) zur Erfassung des von der Schnittstelle ausgehenden Vorrangs für eine Bedienungsanforderung, Mittel ($COMP_i$) zum Vergleich zwischen der von der genannten Schnittstelle ausgehenden Vorranganfrage und allen auf der Vorrangbusleitung auftretenden Vorranganfragen,
wobei das System Mittel zur asynchronen Auswahl aufweist, die dadurch gekennzeichnet sind, daß sie bei jeder Schnittstelle aufweisen:

asynchrone Steuermittel zur Vorauswahl (TD, $AP_i$), die mit den Mitteln zur Erfassung ($PR_i$) und zum Vergleich ($COMP_i$) verbunden sind, und die dazu beauftragt sind, den höchsten von der genannten Schnittstelle angeforderten Vorrang bezüglich der von der Zentraleinheit erzeugten Unterbrechung festzustellen,
innerhalb der Vergleichsmittel vorgesehene Mittel, die mit den asynchronen Steuermitteln zur Vorauswahl verbunden sind, zur Erzeugung einer logischen Information $COMP_i = 1$, wenn der von einer Schnittstelle angeforderte Vorrang dem höchsten in der Busleitung vorliegenden Vorrang gleich ist,
eine bistabile mit der CCU BUS verbundene Kippschaltung zur Auswahl ($S_i$),
logische Mittel ($REC_i^2$, $O_i$, $DR_i^3$), die auf der Leitung SER SELECT hintereinandergeschaltet sind, und die den logischen Pegel SS i am Ausgang der Leitung SER SELECT der jeweiligen Schnittstelle in Abhängigkeit von der logischen in derselben Leitung SER SELECT am Eingang derselben Schnittstelle vorliegenden Pegel ($SS_{i-1}$) und in Abhängigkeit von der logischen von dem Vergleichsmittel $COMP_i$ angegebenen Pegel so steuert, daß

$$SS_i = SS_{i-1} + COMP_i$$

wobei das Zeichen + eine logische ODER Operation bedeutet
Mittel zur Betätigung der bistabilen Kippschaltung $S_i$, wenn

$$COMP_i = 1 \text{ und } SS_{i-1} = 0$$

wodurch die eigentliche Schnittstellenauswahl durch eine einfache von der Zentraleinheit abgewickelte Ermittlung der Schnittstelle ausgeführt wird, deren bistabile Kippschaltung ($S_i$) den logischen Zustand 1 aufweist.

2. Auswahlsystem nach Anspruch 1, dadurch gekennzeichnet, daß das Aktualisieren des Vorrangs der von den Schnittstellen ausgehenden Bedienungsanforderungen gemäß einer logischen von der Zentraleinheit zyklisch erzeugten Angabe (TD) ohne Konflikt mit einem Unterbrechungsbefehl zur Schnittstellenauswahl durchgeführt wird.

## Claims

1. An interface selection system to be serviced by a central processing unit through a bus (CCU BUS) on a priority interruption basis of the type which includes, a selection line (SER SELECT) serially connecting the interfaces to be serviced from down to up the line, a priority bus (PR BUS) on to which the priorities of all pending service requests are signalled by the interfaces and, within each interface, registering means ($PR_i$) for registering the priority of the service request formulated by said interface, and comparison means ($COMP_i$) for comparing the priority of the request formulated by the interface under consideration with all the priorities appearing on the priority bus, said system being comprised of asynchronous pre-selection means characterized in that they include, in each interface:

asynchronous pre-selection control means (TD, $AP_i$) connected to said registering means ($PR_i$) and to said comparison means ($COMP_i$) for up-dating the priority of the service request pending in the interface under consideration, in an asynchronous way with respect to the interrupt operation of the central processing unit;
means within said comparison means connected to said pre-selection means for supplying logic information $COMP_i = 1$ when the interface request priority is equal to the highest priority level appearing on the priority bus;
a select latch ($S_i$) connected to CCU BUS;
logic means ($REC_i^2$, $O_i$, $DR_i^3$) series-mounted on line SER SELECT and controlling the logic level $SS_i$

8

0 005 722

on the line SER SELECT at its outputs from the interface under consideration according to the logic level ($SS_{i-1}$) on the same line at the input of the same interface and according to the level indicated by comparator $COMP_i$, so that:

$$SS_i = SS_{i-1} + COMP_i$$

where sign + is indicative of a logic OR;
means for setting latch $S_i$ when $COMP_i = 1$ and $SS_{i-1} = 0$;
whereby the interface selection operation is performed by the mere detection by the central unit of that interface wherein latch $S_i$ assumes logic level 1.

2. A selection system according to claim 1, characterized in that said up-dating of the priority of the service request pending in each interface is carried out under the control of a logic information (TD) supplied cylically by the central processing unit without interfering with an interrupt control for interface selection.

9

FIG · 1

FIG · 4

FIG· 2

FIG·3

CCU BUS
I/O
IRR
TA
TD

ADAPT 3
SS$_3$ entrée
SS$_3$ sortie
PR$_3$
DEMANDE SERVICE
COMP 3
P3

PRIORITE Ø=MAXI

ADAPT 2
SS$_2$ entrée
SS$_2$ sortie
PR 2
DEMANDE SERVICE
COMP 2
P2

PRIORITE 3

ADAPT 1
SS 1 entrée
SS 1 sortie
PR 1
DEMANDE SERVICE
COMP 1
P1

PRIORITE Ø

$t_1$ $t_2$

FIG·5